# EUROPEAN PATENT APPLICATION

(11) **EP 4 317 320 A1**
(43) Date of publication of application: **07.02.2024**
(21) Application number: 22780421.8
(22) Date of filing: 23.03.2022
(51) Int. Cl.: C08L 81/02, C08L 101/12, H01M 4/86, H01M 4/96, C08G 75/0209, H01M 8/10, C08K 3/04

(54) **THERMOPLASTIC RESIN, THERMOSETTING RESIN, DISPERSION COMPOSITION, LAMINATE FOR SOLID POLYMER FUEL CELL, AND METHOD FOR MANUFACTURING LAMINATE FOR SOLID POLYMER FUEL CELL**

(30) Priority: 29.03.2021 JP 2021055008; 26.11.2021 JP 2021192412
(71) Applicant: Tosoh Corporation, Yamaguchi 746-8501 (JP)
(72) Inventor: MIYAZAWA, Atsushi, Ayase-shi Kanagawa 252-1123 (JP); OZAKI, Sou, Yokkaichi-shi Mie 510-8540 (JP); TOGO, Eiichi, Yokkaichi-shi Mie 510-8540 (JP); INOUE, Hiroshi, Yokkaichi-shi Mie 510-8540 (JP)
(74) Representative: TBK
(86) International application number: PCT/JP2022/013703
(87) International publication number: WO 2022/210207

(57) **Abstract**

Provided are a thermoplastic resin and a thermosetting resin for forming a microporous layer of a polymer electrolyte fuel cell that enable the designing of properties of a microporous layer other than the ability to adjust water content, such as thermal conductivity. Also provided are liquid dispersion compositions containing either of the resins; laminates for a polymer electrolyte fuel cell; and methods for manufacturing a laminate for a polymer electrolyte fuel cell. A thermoplastic resin (thermosetting resin) for forming a microporous layer of a polymer electrolyte fuel cell, wherein the thermoplastic resin (thermosetting resin) has a melt viscosity at 350°C of less than or equal to 200 Pa·s, and in an instance where 2 g of the thermoplastic resin (thermosetting resin) is immersed in 100 ml of hot water having a temperature of 100°C for 6 hours, an amount of metal ions dissolved from the thermoplastic resin (thermosetting resin) is less than or equal to 65 ppm; liquid dispersion compositions; laminates for a polymer electrolyte fuel cell; and methods for manufacturing a laminate for a polymer electrolyte fuel cell.

## Description

### TECHNICAL FIELD

The present invention relates to a thermoplastic resin and a thermosetting resin that enable the designing of properties of a microporous layer of a polymer electrolyte fuel cell. The present invention also relates to liquid dispersion compositions containing either of the resins, to laminates for a polymer electrolyte fuel cell in which a microporous layer is adhered and to methods for manufacturing a laminate for a polymer electrolyte fuel cell.

### BACKGROUND ART

Electrolyte membranes frequently used in polymer electrolyte fuel cells include, for example, proton exchange membranes, such as those made from a perfluorocarbon sulfonic acid.

The proton exchange membranes serve as an ion-conductive electrolyte and have an ability to separate a fuel gas from an oxidant gas. These abilities can be exhibited by humidifying the proton exchange membranes.

Accordingly, to provide superior cell characteristics, it is important to sufficiently supply the gases by diffusion to the polymer electrolyte membrane and humidify the polymer electrolyte membrane fully or nearly fully.

However, if water flooding occurs in a catalyst layer disposed on a surface of the electrolyte membrane, the fuel gas and the oxidant gas cannot be continuously supplied to the catalyst layer, and, consequently, power generation becomes unstable. Accordingly, it is necessary not only to maintain the ability to diffuse gases but also to prevent water flooding.

Typically, in fuel cells, the gas diffusion layers are disposed such that the electrolyte membrane and the catalyst layers are firmly held therebetween. However, it is known that because of the carbon fiber that forms the gas diffusion layers, the gas diffusion layers can cause breakage of the electrolyte membrane. Specifically, the breakage may occur if an end portion of the carbon fiber comes into contact with the membrane when compression occurs during the assembly of the fuel cell.

Accordingly, an approach that has been taken is to provide, between the gas diffusion layer (GDL) and the catalyst layer, a microporous layer containing a carbon powder and a water-repellent resin, such as polytetrafluoroethylene (PTFE), so that the water content in the polymer electrolyte membrane can be adjusted while conductivity and the ability to diffuse gases are maintained. However, because of their repellency, water-repellent resins have low adhesion to the gas diffusion layer (GDL).

JP-A- 2018-092775, listed below as Patent Literature 1, discloses that a microporous layer formed of a polytetrafluoroethylene having a molecular weight of 1,000,000 or less can improve not only the ability to adjust water content but also the adhesion of the gas diffusion layer to the catalyst layer.

### PRIOR ART DOCUMENTS

### PATENT DOCUMENTS

Patent Document 1: JP-A- 2018-92775

### DISCLOSURE OF INVENTION

### TECHNICAL PROBLEM

Unfortunately, the content of the water-repellent resin, such as polytetrafluoroethylene, in the microporous layer depends on a balance between an anti-flooding property and an anti-dry-out property, and, therefore, the microporous layer has low flexibility regarding the designing of properties other than the ability to adjust the water content.

The present invention has been made in view of the problem of the technology of the related art. Objects of the present invention are to provide a thermoplastic resin and the like for forming a microporous layer of a polymer electrolyte fuel cell that enable the designing of properties of a microporous layer other than the ability to adjust the water content, such as adhesion to the gas diffusion layer and thermal conductivity and to provide liquid dispersion compositions containing either of the resins, laminates for a polymer electrolyte fuel cell, the laminates being ones in which any of the liquid dispersion compositions are used, and methods for manufacturing a laminate for a polymer electrolyte fuel cell.

### SOLUTION TO PROBLEM

The present inventors diligently conducted studies to achieve the objects and, consequently, discovered that the objects can be achieved by using a thermoplastic resin or the like having a viscosity lower than a melt viscosity of a water-repellent resin for a heating step for forming the microporous layer that involves the melting of the water-repellent resin, such as polytetrafluoroethylene, which is used in the related art as described above. Accordingly, the present inventors completed the present invention.

Specifically, the present invention resides in the following (1) to (26).
(1) A thermoplastic resin for forming a microporous layer of a polymer electrolyte fuel cell, wherein the thermoplastic resin has a melt viscosity at 350°C of less than or equal to 200 Pa·s, and in an instance where 2 g of the thermoplastic resin is immersed in 100 ml of hot water having a temperature of 100°C for 6 hours, an amount of metal ions dissolved from the thermoplastic resin is less than or equal to 65 ppm.
(2) The thermoplastic resin according to item (1), wherein the thermoplastic resin has a melting point of 120°C or greater and 300°C or less.
(3) The thermoplastic resin according to item (1) or (2), wherein secondary particles of the thermoplastic resin have an average particle size of 5 µm or greater and 50 µm or less.
(4) The thermoplastic resin according to any one of items (1) to (3), wherein secondary particles of the thermoplastic resin have a specific surface area of greater than or equal to 2.0 m²/g.
(5) The thermoplastic resin according to any one of items (1) to (4), wherein the thermoplastic resin has a water contact angle of 80° or greater and 120° or less.
(6) The thermoplastic resin according to any one of items (1) to (5) comprising a filler.
(7) The thermoplastic resin according to any one of items (1) to (6), wherein the thermoplastic resin is a polyphenylene sulfide resin.
(8) A thermosetting resin for forming a microporous layer of a polymer electrolyte fuel cell, wherein the thermosetting resin has a melt viscosity at 350°C of less than or equal to 200 Pa·s, and in an instance where 2 g of the thermosetting resin is immersed in 100 ml of hot water having a temperature of 100°C for 6 hours, an amount of metal ions dissolved from the thermosetting resin is less than or equal to 65 ppm.
(9) A liquid dispersion composition for forming a microporous layer of a polymer electrolyte fuel cell, wherein the liquid dispersion composition comprises the thermoplastic resin according to any one of items (1) to (7), a conductive carbon material, a dispersion medium and a dispersing agent.
(10) The liquid dispersion composition for forming a microporous layer of a polymer electrolyte fuel cell according to item (9), further comprising a water-repellent resin.
(11) The liquid dispersion composition for forming a microporous layer of a polymer electrolyte fuel cell according to item (9) or (10), wherein the thermoplastic resin is present in an amount of 3 mass% or greater and 35 mass% or less.
(12) A liquid dispersion composition for forming a microporous layer of a polymer electrolyte fuel cell, wherein the liquid dispersion composition comprises the thermosetting resin according to item (8), a conductive carbon material, a dispersion medium and a dispersing agent.
(13) A laminate for a polymer electrolyte fuel cell, wherein the laminate comprises a gas diffusion layer and a microporous layer that are laminated to each other; the microporous layer comprises thermoplastic resin masses derived at least from the thermoplastic resin according to any one of items (1) to (7); and the thermoplastic resin masses are dispersed in a vicinity of an interface between the gas diffusion layer and the microporous layer.
(14) The laminate for a polymer electrolyte fuel cell according to item (13), wherein, in the microporous layer, a large proportion of the thermoplastic resin masses is present near the gas diffusion layer.
(15) The laminate for a polymer electrolyte fuel cell according to item (13) or (14), wherein the microporous layer includes, in an in-plane direction of the microporous layer, a region in which the thermoplastic resin masses exist and a region in which the thermoplastic resin masses do not exist.
(16) The laminate for a polymer electrolyte fuel cell according to any one of items (13) to (15), wherein a ratio between an average particle size of the thermoplastic resin masses and an average pore size of the gas diffusion layer, which is a ratio of the average particle size to the average pore size, is 0.14 or greater and 1.25 or less.
(17) The laminate for a polymer electrolyte fuel cell according to any one of items (13) to (16), wherein the thermoplastic resin masses have an average particle size of 5 µm or greater and 50 µm or less.
(18) A laminate for a polymer electrolyte fuel cell, wherein the laminate comprises a gas diffusion layer and a microporous layer that are laminated to each other; the microporous layer comprises thermosetting resin masses derived at least from the thermosetting resin according to item (8); and the thermosetting resin masses are dispersed in a vicinity of an interface between the gas diffusion layer and the microporous layer.
(19) A method for manufacturing the laminate for a polymer electrolyte fuel cell according to any one of items (13) to (17) comprising applying the liquid dispersion composition for forming a microporous layer according to any one of items (9) to (12) onto the gas diffusion layer, to form an image of the liquid dispersion composition for forming a microporous layer; and performing heating.
(20) A method for manufacturing the laminate for a polymer electrolyte fuel cell according to any one of items (13) to (17) comprising applying the liquid dispersion composition for forming a microporous layer according to any one of items (9) to (12) onto a smooth substrate and drying the liquid dispersion composition, to form a single film of a microporous layer; laminating the single film to a major surface of the gas diffusion layer; and performing heating and compressing.
(21) A method for manufacturing the laminate for a polymer electrolyte fuel cell according to item (18) comprising applying the liquid dispersion composition for forming a microporous layer according to item (8) onto the gas diffusion layer, to form an image of the liquid dispersion composition for forming a microporous layer; and performing heating.
(22) A method for manufacturing the laminate for a polymer electrolyte fuel cell according to item (18) comprising applying the liquid dispersion composition for forming a microporous layer according to item (8) onto a smooth substrate and drying the liquid dispersion composition, to form a single film of a microporous layer; laminating the single film to a major surface of the gas diffusion layer; and performing heating and compressing.
(23) A microporous layer disposed adjacent to a gas diffusion layer for a polymer electrolyte fuel cell and comprising, as major components, conductive carbon and a polyphenylene sulfide resin that serves as the thermoplastic resin according to any one of items (1) to (7).
(24) The microporous layer according to item (23), wherein the polyphenylene sulfide resin has a number average molecular weight Mn of 1000 or greater and 8000 or less and a weight average molecular weight Mw of 7000 or greater and 40000 or less.
(25) The microporous layer according to item (23) or (24), wherein, in an instance where 1 g of the microporous layer is immersed in 15 g of hot water having a temperature of 100°C in a sealed container for 6 hours, a concentration of metal ions dissolved into the hot water from the microporous layer is less than or equal to 56 ppm.
(26) A method for using a laminate for a polymer electrolyte fuel cell comprising a step of, before performing a power generation operation in a fuel cell, passing at least one of media through the laminate for a polymer electrolyte fuel cell according to any one of items (13) to (18), the media being purified water, an acidic aqueous solution and water vapor.

### ADVANTAGEOUS EFFECTS OF INVENTION

In the present invention, a thermoplastic resin or the like having a viscosity lower than the melt viscosity of water-repellent resins, such as polytetrafluoroethylene, is used, and, consequently, properties such as adhesion to the gas diffusion layer and an ability to adjust thermal conductivity, in addition to an ability to adjust water content, can be imparted to the microporous layer.

### BRIEF DESCRIPTION OF DRAWINGS

[Fig. 1] A diagram illustrating an example of an assembly of components forming a fuel cell.
[Fig. 2] A diagram illustrating an example of a laminate of an MPL and a GDL in which a thermoplastic resin is uniformly dispersed.
[Fig. 3] A diagram illustrating an example of a laminate of an MPL and a GDL in which a thermoplastic resin is disproportionately present near the GDL.
[Fig. 4] SEM images of a laminate of Example 1.
[Fig. 5] Magnified views of the SEM images of Fig. 4.
[Fig. 6] Cross-sectional SEM images and an elemental mapping image of the laminate of Example 1.
[Fig. 7] SEM images of a laminate of Example 2.
[Fig. 8] Cross-sectional SEM images and an elemental mapping image of the laminate of Example 2.
[Fig. 9] Magnified views of SEM images of a laminate of Example 3.
[Fig. 10] Cross-sectional SEM images and an elemental mapping image of the laminate of Example 3.
[Fig. 11] Cross-sectional SEM images and an elemental mapping image of a laminate of Example 4.
[Fig. 12] Magnified views of SEM images of a laminate of Example 5.
[Fig. 13] Cross-sectional SEM images and an elemental mapping image of the laminate of Example 5.
[Fig. 14] Cross-sectional SEM images and an elemental mapping image of a laminate of Example 6.
[Fig. 15] A cross-sectional SEM image of a laminate of Comparative Example 1.
[Fig. 16] Cross-sectional SEM images of a laminate of Example 7.

### DESCRIPTION OF EMBODIMENTS

First, a polymer electrolyte fuel cell will be described.

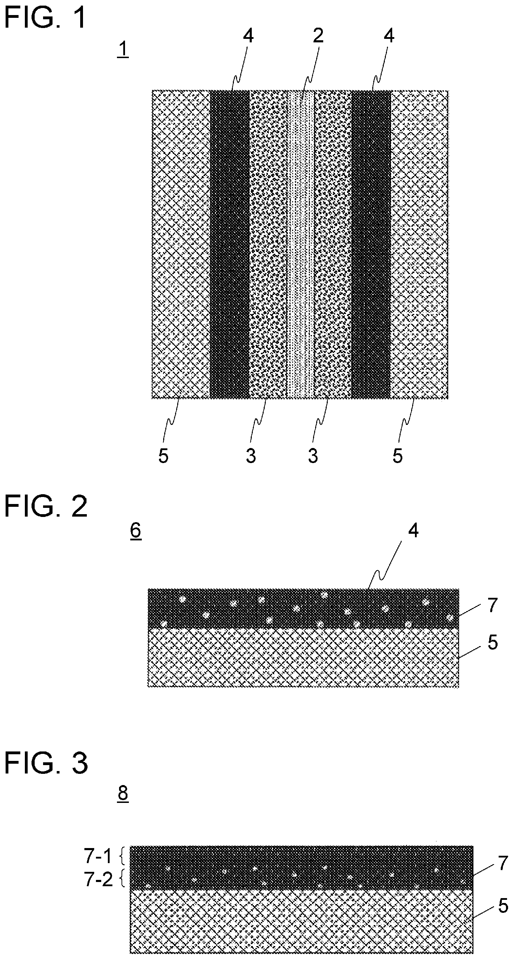

As illustrated in Fig. 1, a polymer electrolyte fuel cell includes a polymer electrolyte membrane 2, which is disposed at a center, a fuel electrode, which is disposed at one side of the polymer electrolyte membrane 2, and an oxidizing electrode, which is disposed at the other side thereof.

The fuel electrode and the oxidizing electrode each include a catalyst layer 3, a microporous layer (MPL) 4 and a gas diffusion layer (GDL) 5, which are disposed in this order, starting from the polymer electrolyte membrane 2-side.

Furthermore, a fuel separator that includes a fuel gas channel is provided outside of the fuel electrode, and an oxidant separator that includes an oxidant gas channel is provided outside of the oxidizing electrode, to form a unit cell of the polymer electrolyte fuel cell.

The polymer electrolyte membrane serves as an ion-conductive electrolyte and has an ability to separate a fuel gas from an oxidant gas. The gas diffusion layers promote the diffusion of a reactive gas to the catalyst layers.

The microporous layer (MPL) 4 disposed between the polymer electrolyte membrane 2 and the gas diffusion layer (GDL) 5 facilitates the transport of the reactive gas to the catalyst layer and the drainage of water that is produced in the catalyst layer on the oxidizing electrode-side as a result of an electrode reaction, to the oxidant gas channel, thereby avoiding flooding due to a liquid present in the MPL and also maintaining a proper moisture content to prevent the drying of the polymer electrolyte membrane.

As described, the microporous layer is provided mainly to adjust water content, and, therefore, changing the type and content of the water-repellent resin that forms the microporous layer is difficult.

### <Thermoplastic Resin or the Like>

The thermoplastic resin and the thermosetting resin (which will be referred to as a "thermoplastic resin or the like" in this specification) are resins that form the microporous layer of a polymer electrolyte fuel cell. The thermoplastic resin or the like has a melt viscosity at 350°C of less than or equal to 200 Pa s.

When a microporous layer is to be formed by applying, to a gas diffusion layer, a liquid dispersion composition for forming a microporous layer, the composition containing a water-repellent resin, and then melting the water-repellent resin by heating, high flowability is achieved because of the thermoplastic resin or the like having a melt viscosity lower than the melt viscosity of the water-repellent resin. Consequently, entanglement of the resin with a carbon fiber that forms the gas diffusion layer disposed adjacent to the microporous layer is facilitated, and entering into pores that are present near a surface layer of the gas diffusion layer is facilitated.

Consequently, strong adhesion can be formed between the gas diffusion layer and the microporous layer, which can prevent an increase in electrical resistance that may occur if the components are separated from each other when the fuel cell repeatedly expands and contracts in association with the power generation operation of the cell.

Furthermore, by using the thermoplastic resin or the like in addition to the water-repellent resin, the resin content of the microporous layer can be increased; consequently, thermal conductivity of the microporous layer can be reduced, which can inhibit the dissipation of heat generated in the catalyst layer due to power generation, and as a result, cold-start-up performance of the cell can be improved.

The thermoplastic resin is a resin having thermal stability, acid resistance, creep resistance and hydrolysis resistance. Examples of the thermoplastic resin include polyphenylene sulfide resins. Resins having thermal stability, acid resistance, creep resistance and hydrolysis resistance include not only thermoplastic resins but also thermosetting resins. Accordingly, a thermosetting resin may be used, and examples thereof include epoxy resins and phenolic resins.

Many epoxy resins and phenolic resins, which are thermosetting resins, have specifications under which the resins begin to decompose in an environment at 350°C. Accordingly, in instances where a resin has a melt viscosity of less than or equal to 200 Pa·s at the time at which the resin becomes molten, that is, before the resin is cured, the resin can be used.

The thermoplastic resin or the like is one in which, in an instance where 2 g of the thermoplastic resin or the like is immersed in 100 mL of hot water having a temperature of 100°C for 6 hours, an amount of metal ions dissolved from the thermoplastic resin or the like is less than or equal to 65 ppm. If the amount of dissolution is greater than 65 ppm, power generation performance may be degraded. This is because the metal ions dissolved from the thermoplastic resin or the like may poison the catalyst layer or may form a bond in the ion exchange membrane and thus may hinder the transport of the proton. The amount of dissolution is preferably less than or equal to 50 ppm, more preferably less than or equal to 10 ppm and particularly preferably less than or equal to 5 ppm.

Note that equation 1 below shows the synthesis of a polyphenylene sulfide resin, with sodium chloride being produced as a by-product. Furthermore, polyphenylene sulfide resins include sodium (Na) at an end thereof.

nCl-C₆H₄-Cl + nNa₂S → [-C₆H₄-S-]n + 2nNaCl equation 1

In the equation, n represents an integer.

A major factor responsible for the dissolution of sodium ions from a polyphenylene sulfide resin is the sodium chloride that is a by-product. Other possibilities are that small amounts of sodium ions as single units from an end of the polymer may be present, and small amounts of sodium ions from an inadequate polymer produced in the process of synthesizing the resin may be present; examples of such inadequate polymers include monomers and oligomers with sodium being bonded to an end thereof.

Accordingly, by performing a pretreatment, such as washing, on the thermoplastic resin or the like, the amount of dissolved metal ions can be reduced.

It is preferable that the thermoplastic resin or the like have a melting point of 120°C or greater and 300°C or less. The melting point of water-repellent resins, such as a polytetrafluoroethylene resin, is approximately 327°C. Thus, the thermoplastic resin or the like is melted earlier than the water-repellent resin in the heating process for forming a microporous layer, and, therefore, the thermoplastic resin or the like can easily enter the pores in the gas diffusion layer; as a result, improvement in the adhesion between the microporous layer and the gas diffusion layer can be expected.

It is preferable that secondary particles of the thermoplastic resin or the like have an average particle size of 5 µm or greater and 50 µm or less. When the average particle size of the secondary particles is within the mentioned range, the thermoplastic resin or the like can easily enter the pores in the gas diffusion layer. Furthermore, when the size is less than or equal to 50 µm, application by spray coating, for example, can be carried out stably in instances in which the application onto the GDL is carried out with a composition in the form of a liquid dispersion.

It is preferable that the secondary particles of the thermoplastic resin or the like have a specific surface area of greater than or equal to 2.0 m²/g. When the specific surface area is greater than or equal to 2.0 m²/g, metal ions can be effectively removed from a surface of the resin in instances in which the thermoplastic resin or the like is washed in advance for the removal of metal ions.

It is preferable that the thermoplastic resin or the like have a water contact angle of 80° or greater and 120° or less. When the thermoplastic resin or the like has a water contact angle of 80° or greater and 120° or less, the thermoplastic resin or the like does not repel or attract water and, therefore, does not affect the adjustment of water content performed by the water-repellent resin. Accordingly, the designing of the properties of the microporous layer can be accomplished without the need to consider a relation with the adjustment of water content.

The thermoplastic resin or the like may include a filler. In particular, polyphenylene sulfide resins are brittle and have low impact resistance and, therefore can have improved impact resistance if a filler is included. Furthermore, by including a filler in the thermoplastic resin or the like, properties such as thermal conductivity and electrical conductivity can be imparted in addition to the properties associated with adhesion to the gas diffusion layer. Examples of the filler include particles and fibers of glass, carbon, metal oxides, nitrides, carbonic acid salts, boric acid salts, boron compounds, hydroxides or the like. In the instance where a filler is included, the thermoplastic resin or the like can be prepared, for example, by kneading the thermoplastic resin or the like with the filler and grinding the mixture.

### <Liquid Dispersion Composition for Forming Microporous Layer>

According to the present invention, a liquid dispersion composition for forming a microporous layer comprises the thermoplastic resin or the like, a conductive carbon material, a dispersion medium and a dispersing agent. If necessary, the liquid dispersion composition may include a water-repellent resin and one or more additives. The dispersing agent is not limited as long as the dispersing agent can disperse the thermoplastic resin or the like. Accordingly, a commercial dispersing agent is employed. The dispersion medium may be an organic solvent or water, depending on the type of dispersing agent that can disperse the thermoplastic resin or the like.

The solids components of the liquid dispersion composition are formed of the thermoplastic resin or the like and the conductive carbon material. The solid components may further include a water-repellent resin.

In the liquid dispersion composition, a content of the thermoplastic resin or the like depends on the properties to be imparted to the microporous layer, pore sizes of the gas diffusion layer, and the like. The content may be 3 mass% or greater and 35 mass% or less, which is preferable because such a content produces effects of the thermoplastic resin or the like sufficiently. More preferably, the content may be 20 mass% or greater and 35 mass% or less.

Examples of the water-repellent resin include polytetrafluoroethylene (PTFE), polyvinylidene fluoride (PVDF) and copolymers of tetrafluoroethylene and hexafluoropropylene (FEP).

Examples of the conductive carbon material include at least one of carbon, carbon fibers and mixtures thereof. Examples of the carbon include conductive carbon, amorphous carbon, graphite and graphene. Examples of the carbon fibers include conductive carbon fibers and carbon nanotubes.

Examples of the dispersion medium and the dispersing agent include alcohols, such as isopropyl alcohol.

Examples of the one or more additives include various surfactants.

The liquid dispersion composition for forming a microporous layer can be produced as follows. The thermoplastic resin or the like, a dispersion medium and a dispersing agent are added to a mixed solvent containing purified water and isopropyl alcohol. If necessary, a water-repellent resin and one or more additives are also added thereto. Thereafter, the materials are stirred, for example, with sonication for 30 minutes. A dispersing agent may be added to improve the dispersibility of the composition. The dispersing agent may be, for example, Triton X-100 ("Triton" is a registered trademark), manufactured by Dow. The amount of addition can be adjusted depending on a weight ratio between the polyphenylene sulfide resin and the conductive carbon material and their concentrations in the dispersion.

### <Microporous Layer>

According to the present invention, a microporous layer is a layer of a thin film layer formed on a major surface opposing the catalyst layer of the adjacent gas diffusion layer. The microporous layer has a porous structure for conductivity and a gas diffusion property. In general, many microporous layers have a thickness of 50 µm or greater and 100 µm or less. In the present invention, the microporous layer is formed to have such a thickness.

According to the present invention, the microporous layer comprises, as major components, conductive carbon and the thermoplastic resin or the like (e.g., a polyphenylene sulfide resin).

In the microporous layer of the present invention, it is preferable that the polyphenylene sulfide resin have a number average molecular weight Mn of 1000 or greater and 8000 or less and a weight average molecular weight Mw of 7000 or greater and 40000 or less.

Regarding the microporous layer, it is preferable that, in an instance where 1 g of the microporous layer is immersed in 15 g of hot water having a temperature of 100°C in a sealed container for 6 hours, a concentration of metal ions dissolved into the hot water from the microporous layer be less than or equal to 56 ppm.

The microporous layer can be formed with either of the two methods described below.

One method is as follows. The liquid dispersion composition for forming a microporous layer is directly applied onto the surface of the gas diffusion layer one or more times with a known method, such as a casting method or a spray method, and subsequently, heating (drying) is performed. In this manner, the forming can be accomplished. In this instance, the concentration of the polyphenylene sulfide resin in the liquid dispersion composition and the number of times that the application is performed are appropriately adjusted by using, as indices, a thickness, gas permeability and the like of the microporous layer. Regarding the conditions for the drying, it is preferable that the drying be performed by selecting a temperature and a time period that allow the dispersion medium (e.g., an alcohol) to be sufficiently evaporated to accomplish drying.

The other method is as follows. The liquid dispersion composition for forming a microporous layer is applied onto a heat-resistant smooth substrate, such as that made of glass, metal, ceramics or the like, one or more times with a casting method or a spray method as described above, and subsequently, the liquid dispersion composition is dried. The resulting coating layer is removed from the substrate to give a microporous layer as a single body. The microporous layer is laminated to the gas diffusion layer, and then, heating and compressing are performed; thus, the microporous layer can be secured. In this instance, it is preferable to select a compression load and a heating condition that fall within a range in which significant plastic deformation of the gas diffusion layer does not occur. For example, a load of 0.5 to 2 MPa and a temperature of 100 to 250°C are preferable.

### <Laminate for Polymer Electrolyte Fuel Cell>

According to the present invention, a laminate for a polymer electrolyte fuel cell is a laminate comprising a gas diffusion layer and a microporous layer that are laminated to each other. The gas diffusion layer and the microporous layer are bonded to each other with thermoplastic resin masses or thermosetting resin masses (hereinafter referred to as "thermoplastic resin masses or the like") present in the microporous layer.

The thermoplastic resin masses or the like are masses of primary particles and secondary particles of a powder of the thermoplastic resin or the like and masses of secondary particles of the liquid dispersion composition. After these particles become molten in the microporous layer and at an interface with the gas diffusion layer, they form masses.

The thermoplastic resin masses or the like may be dispersed uniformly in a thickness direction, as illustrated in Fig. 2. Preferably, a large proportion of the thermoplastic resin masses or the like may be present near the gas diffusion layer, as illustrated in Fig. 3. It is preferable that, at least in a cross section, the thermoplastic resin masses or the like be disproportionately present in a region extending less than one half the thickness from the gas diffusion layer.

In the instance where a large proportion of the thermoplastic resin masses or the like is present near the gas diffusion layer, the adhesion between the microporous layer and the gas diffusion layer is improved.

Furthermore, in instances where a conductive carbon material is used in addition to the resin for forming a microporous layer, the bonding to the gas diffusion layer is accomplished in a state in which the carbon powder is included in the resin.

In an in-plane direction of the microporous layer, the thermoplastic resin masses or the like may be dispersed uniformly, or there may be a region in which the thermoplastic resin masses or the like exist and a region in which the thermoplastic resin masses or the like do not exist.

The thermoplastic resin masses or the like can be made to be present in a desired pattern, and, accordingly, design flexibility of the microporous layer can be improved.

For example, in the plane in which the microporous layer is formed, a relatively high content of the thermoplastic resin masses or the like may be made to be present at or near a peripheral region with respect to a center of the plane, and in this case, the thermal conductivity of the peripheral region can be reduced. In the peripheral region, in instances where the content of the thermoplastic resin or the like is increased, the thermal conductivity of the microporous layer itself is reduced, which produces an effect of inhibiting heat generated in an oxidation-reduction reaction from being dissipated from the catalyst layer. This effect improves, for example, start-up performance of a cell associated with low-temperature environments.

At the center in the plane of the microporous layer, at which a relatively low content of the thermoplastic resin or the like is present, efficient heat dissipation from the catalyst layer can be accomplished, and, consequently, heat dissipation properties during a continuous operation of a cell can be improved.

Note that in the present invention, the expression "region in which the thermoplastic resin masses or the like do not exist" refers to a region measuring at least 50 square micrometers in which the thermoplastic resin masses or the like are totally absent. That is, the expression does not refer to spaces between adjacent thermoplastic resin masses or the like.

The thermoplastic resin masses are dispersed in a vicinity of the interface between the gas diffusion layer and the microporous layer. In the microporous layer, the thermoplastic resin masses may be dispersed uniformly or disproportionately in the plane (planar direction) of the microporous layer or may be dispersed uniformly or disproportionately in the layer. In particular, regarding the dispersing of the thermoplastic resin masses in the layer, the disproportionate presence of the thermoplastic resin masses near the opposing surfaces (interface) of the microporous layer and the gas diffusion layer can be expected to increase the adhesion between the layers.

It is preferable that a ratio between an average particle size of the thermoplastic resin masses or the like and an average pore size of the gas diffusion layer, which is a ratio of the average particle size to the average pore size, be 0.14 or greater and 1.25 or less.

If the ratio is less than 0.14, the thermoplastic resin masses or the like may travel deep into the pores of the gas diffusion layer, which may result in a tendency for the adhesion between the microporous layer and the gas diffusion layer to be reduced. If the ratio is greater than 1.25, the thermoplastic resin masses or the like may clog the pores of the gas diffusion layer, which may reduce the diffusibility of a reactive gas.

Preferably, the average particle size of the thermoplastic resin masses or the like is 5 µm or greater and 50 µm or less, depending on the average pore size of the gas diffusion layer.

The size of the thermoplastic resin masses or the like in the laminate can be adjusted in association with, for instance, a state of the powder, the size of the secondary particles of the thermoplastic resin or the like in the liquid dispersion composition and the concentration of the thermoplastic resin masses or the like in the liquid dispersion composition.

The laminate for a polymer electrolyte fuel cell can be formed as follows. The above-described liquid dispersion composition for forming a microporous layer is applied onto a gas diffusion layer made of carbon paper or carbon cloth and then heated to melt the resin component. Examples of carbon paper that is particularly widely used include Torayca, manufactured by Toray Industries, Inc. The direct application onto the gas diffusion layer enables a portion of the thermoplastic resin masses or the like in the liquid dispersion composition to be reliably disposed in pores near a surface layer of the gas diffusion layer and on a surface of the carbon fiber.

The application of the liquid dispersion composition can be carried out with a known method. A spray method, an ink jet method or a screen method may be preferably used because, with any of these methods, an image having a desired pattern of the liquid dispersion composition for forming a microporous layer can be formed, and, therefore, the designing of the properties of the microporous layer is facilitated.

Regarding the solids components, a liquid dispersion composition containing a conductive carbon material and the thermoplastic resin masses or the like may be applied first, and subsequently, a liquid dispersion composition further containing a water-repellent resin may be applied. In this case, the thermoplastic resin masses or the like can be reliably made to be present near the diffusion layers.

According to the present invention, the laminate for a polymer electrolyte fuel cell can be used by carrying out the following step: after a fuel cell is assembled, and before a power generation operation is performed, at least one of media, namely, purified water, an acidic aqueous solution and water vapor, is passed through a tube that is intended to be used to supply hydrogen or air. The medium may be passed through one of the hydrogen supply tube and the air supply tube or on both sides. In instances where the medium is passed through only one of the supply tubes, the side of the fuel cell stack on which the medium is not passed is not sufficiently washed, and, therefore, it is preferable to pass the medium on both sides. Furthermore, although the passing of the medium can be performed at room temperature, it is preferable that the passing be performed in a state in which the temperature has been increased to a fuel cell operating temperature.

### <Fuel Cell and the Like>

In a fuel cell, the above-described laminate for a polymer electrolyte fuel cell is to be disposed to firmly hold a membrane electrode assembly that includes an electrolyte membrane (perfluorosulfonic acid) and catalyst layers disposed on both the major surfaces thereof. In this case, the microporous layer is to be arranged to face the catalyst layer. These components may be integrated by being compressed in a hot press at a temperature set at 90 to 120°C.

Furthermore, the resulting member is firmly held with gaskets, separators, gaskets and end plates, which are arranged in this order. Typically, the separators are made of graphite and have respective channels through which hydrogen and air flow. The channels are each formed in the major surface opposing the gas diffusion layer. The end plates are made of stainless steel or the like. A connector for supplying and discharging gas, a thermocouple, a heater and the like are mounted to the end plates. The end plates are also provided with a fastening mechanism for compressing and securing the cell stack. Industrial fuel cells and vehicle-mounted fuel cells are used as stack cells in which units are repeatedly stacked with multiple electrolyte membranes being used. In the present invention, a single unit cell (hereinafter abbreviated as a "unit cell") with one electrolyte membrane was used for experiments and evaluations.

### EXAMPLES

The present invention will now be described in more detail with reference to Examples. It should be noted that the present invention is not limited to the Examples described below. Examples 1 to 6 were carried out for proof of principle, that is, for the purpose of verifying the differences in the manner of entanglement with carbon fibers associated with instances in which a polyphenylene sulfide resin was used alone.

### <Production of Polyphenylene Sulfide Resin>

The polyphenylene sulfide resin used in the Examples was prepared by dehydrating sodium sulfide, which was used as a raw material, and subsequently polycondensing the sodium sulfide with para-dichlorobenzene (equation 1, shown above).

Regarding the polyphenylene sulfide resin used in the present invention, two approaches regarding manufacture could be taken for reducing, as much as possible, the dissolution of sodium ions that may occur after incorporation into a fuel cell. One approach is as follows. In the production process, in the step of performing drying by evaporating the solvent (e.g., N-methylpyrrolidone), the drying is performed at a high temperature for a short time. As a result, the polyphenylene sulfide powder has a surface texture with a reduced number of microscopic irregularities, that is, has a reduced surface area, and, consequently, the dissolution of metal (sodium) ions can be inhibited. On the other hand, in the drying step, if separation drying using filtration or the like, which is performed at a relatively low temperature, is employed, the resulting surface texture has a relatively large number of microscopic irregularities. In this instance, the shape of the resin is advantageous for removing the metal (sodium) ions by washing the polyphenylene sulfide resin. In the present examples, a resin prepared by employing the former step was used. However, depending on the content of the sodium ions present in the polyphenylene sulfide resin, it is possible to employ the latter step, thereby increasing the efficiency in the pre-washing.

Commercial polyphenylene sulfide resins are resins pelletized by mixing a filler, such as a glass fiber or a carbon fiber, in order to, for instance, ensure a mechanical strength of a molded article. In the Examples described in the present application, a resin in the form of powder, which contained no filler and was not pelletized, was used.

In Example 8, which will be described later, a washing step was added to prepare the polyphenylene sulfide resin for use so that the dissolution of sodium ions or a monomer and an oligomer could be reduced before use. Examples include a highpressure hot-water treatment at a temperature less than or equal to the melting point of the resin.

### <Measurement of Specific Surface Area>

A measurement using nitrogen adsorption was performed with a multi-point BET method. A pore distribution analyzer (ASAP-2020, manufactured by Micromeritics, Inc.) was used for the measurement.

### <Measurement of Melt Viscosity>

The melt viscosity of the thermoplastic resin was measured with a Koka-type flow tester (trade name: CFT-500, manufactured by Shimadzu Corporation) equipped with a die with a diameter of 1 mm and a length of 2 mm, under conditions including a measurement temperature of 350°C and a load of 10 kg.

### <Measurement of Melting Point>

The melting point of the thermoplastic resin was measured with a differential scanning calorimeter (Q1000, manufactured by TA Instruments Inc.) in accordance with ASTM D3418-82.

Specifically, 5 mg of the resin was accurately weighed and added to an aluminum pan, and an empty aluminum pan was used as a reference. The measurement was carried out over a measurement temperature range of 30 to 350°C at a heating rate of 10°C/min.

In the measurement, the temperature was first increased to 350°C, thereafter, decreased to 30°C and subsequently increased again. The melting point (Tm) was determined as the maximum endothermic peak in the DSC curve over the range of temperatures of 30 to 350°C in the second heating process.

### <Measurement of Average Particle Size of Secondary Particles>

A volume average particle size of the thermoplastic resin was measured by using a particle sizer (Multisizer III, manufactured by Beckman Coulter, Inc.) and performing analysis with analysis software (Beckman Coulter Multisizer 3 Version 3.51.

First, 0.1 to 5 ml of a surfactant (an alkyl benzene sulfonic acid salt, Neogen SC-A, manufactured by DKS Co. Ltd.), which was used as a dispersing agent, was added to 100 to 150 ml of an aqueous electrolyte solution (Isoton-II, manufactured by Coulter), and furthermore, 2 to 20 mg of a measurement sample was added thereto. The electrolyte solution, in which the sample was suspended, was subjected to a dispersing process, which was performed in an ultrasonic disperser (manufactured by Honda Electronics Co., Ltd.) for approximately 1 to 3 minutes. By using the above-mentioned sizer and an aperture, which was a 100-µm aperture, the volume and the number of the thermoplastic resin were measured, and a volume distribution and a number distribution were calculated. From the obtained volume distribution, a volume average particle size (D4: a median value of each of the channels was used as a representative value of the channel) was determined.

### <Measurement of Water Contact Angle>

The water contact angle of the thermoplastic resin was determined as follows. An automatic contact angle meter CA-W model (manufactured by Kyowa Interface Science Co., Ltd.) was used. With an automatic dispenser (AD-31, manufactured by Kyowa Interface Science Co., Ltd.), 10 water droplets were formed on the thermoplastic resin, which had been molded and was in the form of a sheet. The contact angle was measured for each of the droplets, and an average of the measurements was calculated.

Furthermore, the water contact angle of the laminate for a polymer electrolyte fuel cell was measured with the same method.

### <Measurement of Amount of Dissolved Metal Ions>

100 ml of hot water having a temperature of 100°C was added to a quartz flask, and then, 2 g of the thermoplastic resin was immersed in the hot water for 6 hours. The ions in the resulting extract were measured in the following manner, and thus, the amount of dissolved metal ions was measured.

Flame atomic absorption spectroscopy: Na, K
Inductively coupled plasma atomic emission spectroscopy: Ca
Ion chromatography: Cl⁻, No₃⁻, SO₄²⁻
Combustion method: total chlorine

### Example 1

Water and isopropyl alcohol were added to the polyphenylene sulfide resin (average particle size of secondary particles: 10 µm, melt viscosity at 350°C: 13 Pa s, amount of dissolved metal (sodium) ions: 62 ppm) prepared as described in the <Production of Polyphenylene Sulfide Resin> section. Accordingly, a dispersion liquid was prepared. Note that this example was carried out without adding a conductive filler such as carbon black, which is typically added, so that the melting properties of the polyphenylene sulfide resin on carbon paper and its affinity for a carbon fiber could be more clearly examined.

The dispersion liquid was applied onto carbon paper (average pore size: 35 to 40 µm, TGP-H-30, manufactured by Toray Industries, Inc.) such that an amount of application of the polyphenylene sulfide resin could be 0.08 g/cm² on average.

The carbon paper including the dispersion liquid applied thereto was heated at 350°C for 1 hour to give a laminate for a polymer electrolyte fuel cell.

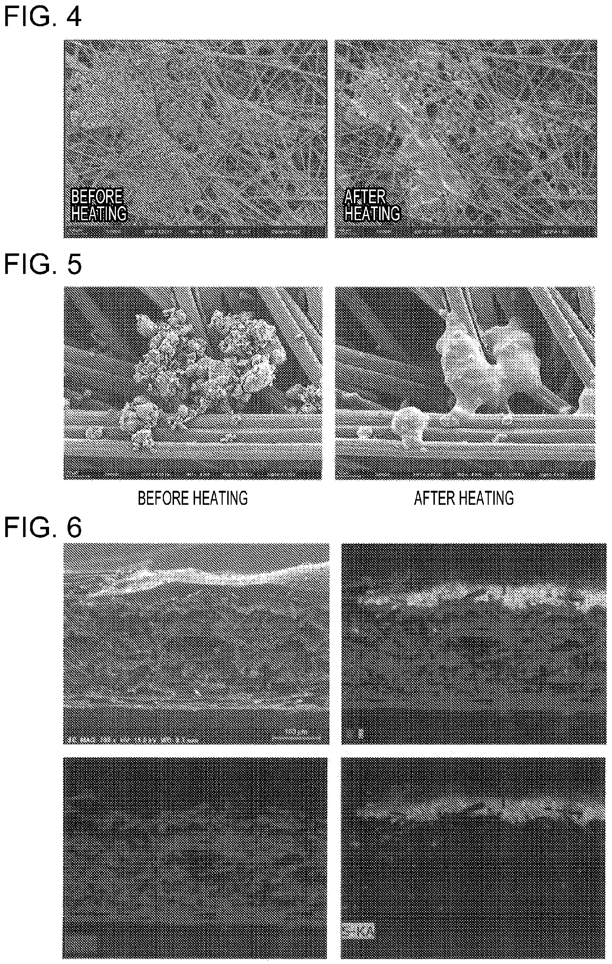

Fig. 4 shows SEM images of the laminate for a polymer electrolyte fuel cell of Example 1 before and after heating. Fig. 5 shows magnified views of the images. Fig. 6 shows cross-sectional images and an SEM-EDX elemental mapping image thereof.

### Example 2

A laminate for a polymer electrolyte fuel cell was prepared as in Example 1, except that the dispersion liquid was applied onto carbon paper uniformly such that the amount of application of the polyphenylene sulfide resin could be 0.01 g/cm² on average.

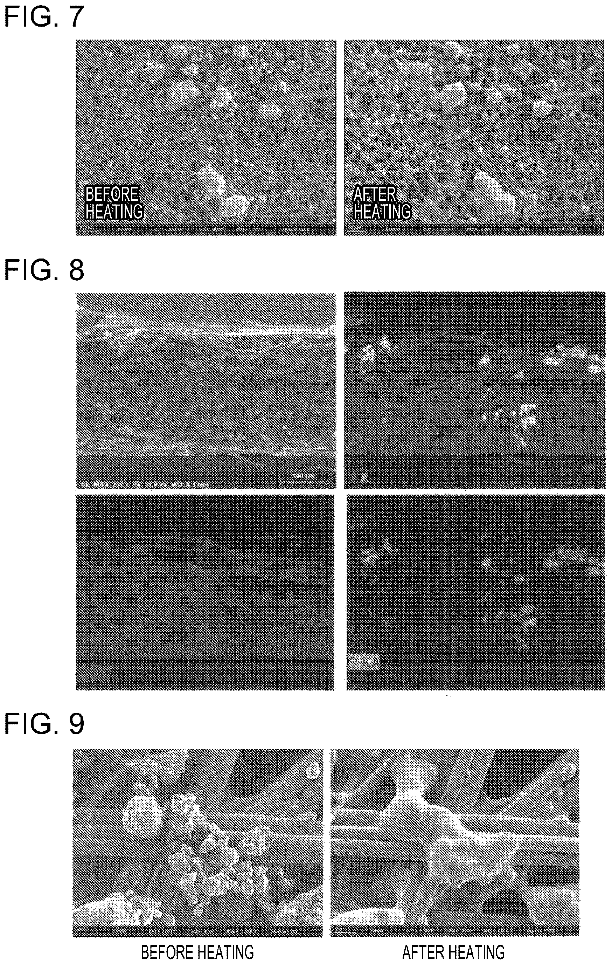

Fig. 7 shows SEM images of the laminate for a polymer electrolyte fuel cell of Example 2 before and after heating. Fig. 8 shows cross-sectional images and an SEM-EDX elemental mapping image thereof.

### Example 3

A laminate for a polymer electrolyte fuel cell was prepared as in Example 1, except that the polyphenylene sulfide resin was replaced with a polyphenylene sulfide resin having secondary particles that have an average particle size of 30 µm.

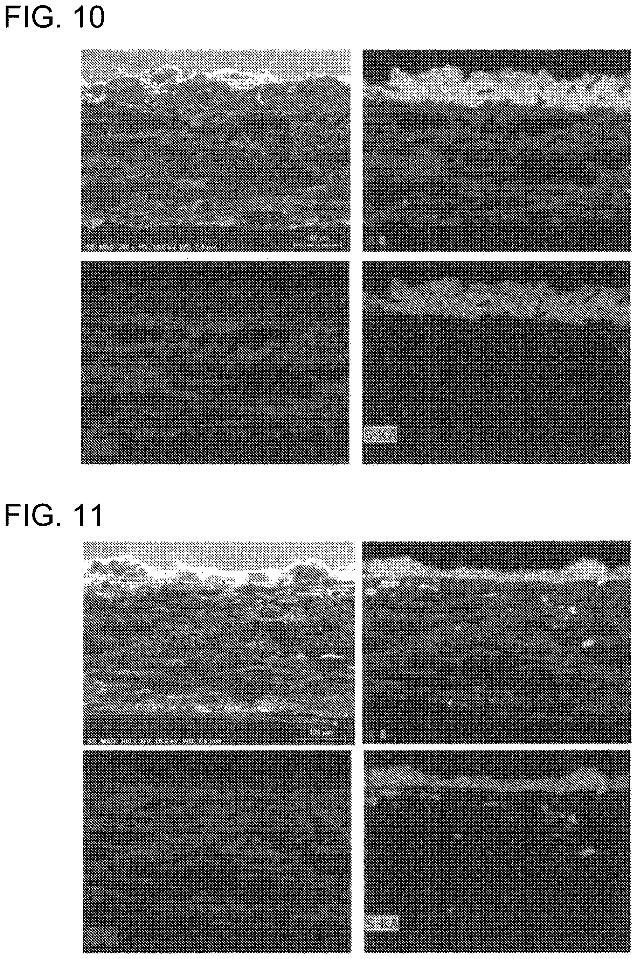

Fig. 9 shows magnified views of SEM images of the laminate for a polymer electrolyte fuel cell of Example 3 before and after heating. Fig. 10 shows cross-sectional images and an SEM-EDX elemental mapping image thereof.

### Example 4

A laminate for a polymer electrolyte fuel cell was prepared as in Example 3, except that the dispersion liquid was applied onto carbon paper uniformly such that the amount of application of the polyphenylene sulfide resin could be 0.01 g/cm² on average.

Fig. 11 shows cross-sectional images and an SEM-EDX elemental mapping image of the laminate for a polymer electrolyte fuel cell of Example 4.

### Example 5

A laminate for a polymer electrolyte fuel cell was prepared as in Example 3, except that the polyphenylene sulfide resin was replaced with a polyphenylene sulfide resin having a melt viscosity at 350°C of 180 Pa·s and an average secondary particle size of 30 µm.

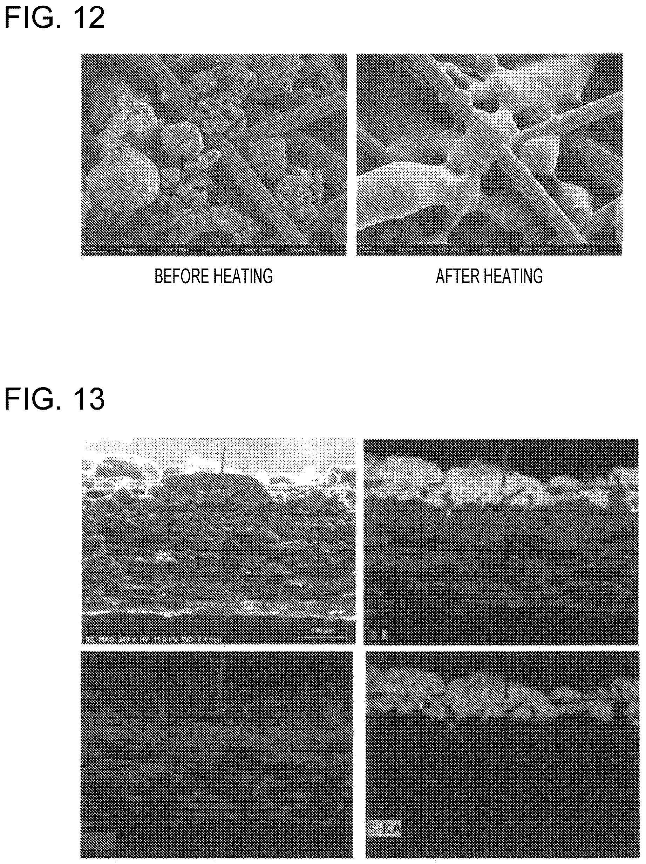

Fig. 12 shows magnified views of SEM images of the laminate for a polymer electrolyte fuel cell of Example 5 before and after heating. Fig. 13 shows cross-sectional images and an SEM-EDX elemental mapping image thereof.

### Example 6

A laminate for a polymer electrolyte fuel cell was prepared as in Example 5, except that the dispersion liquid was applied onto carbon paper uniformly such that the amount of application of the polyphenylene sulfide resin could be 0.01 g/cm² on average.

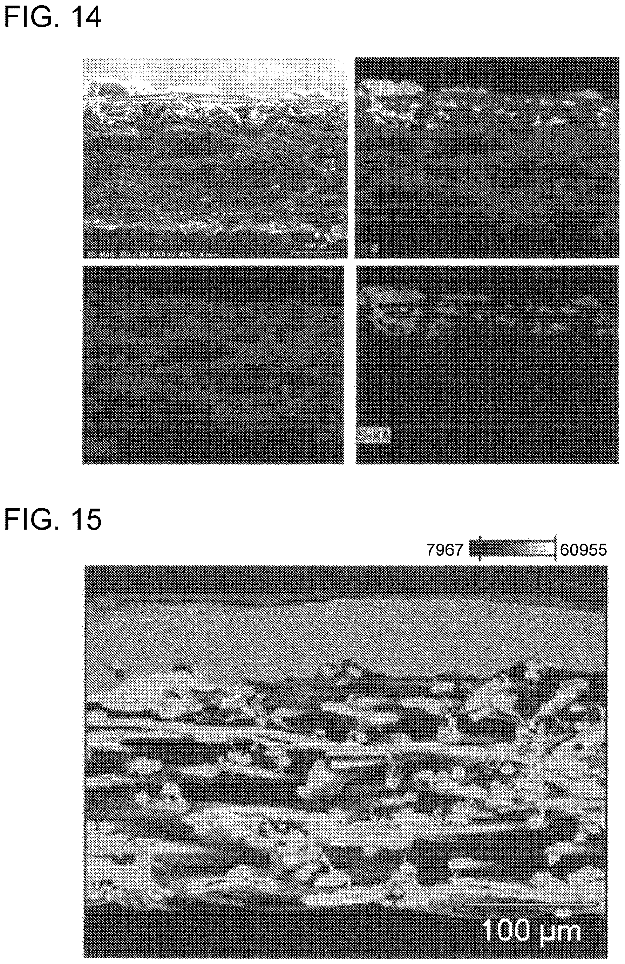

Fig. 14 shows cross-sectional images and an SEM-EDX elemental mapping image of the laminate for a polymer electrolyte fuel cell of Example 6.

### Comparative Example 1

A polytetrafluoroethylene resin (manufactured by Sigma-Aldrich, average particle size: 9 µm, melt viscosity at 350°C: 10⁹ to 10¹⁰ Pa s) and a carbon black (Denka Black, manufactured by Denka Company Limited), which were used in a weight ratio of 3:7, and a dispersing agent were dispersed in an aqueous solution of isopropyl alcohol. Accordingly, a paste for forming a microporous layer was prepared. The paste was applied onto carbon paper and dried and cured at 350°C for 1 hour.

A laminate for a polymer electrolyte fuel cell was prepared as in Example 1, except that the liquid dispersion composition just described was used. Fig. 15 shows a cross-sectional image of the laminate for a polymer electrolyte fuel cell of Comparative Example 1.

### <Evaluation>

The laminates for a polymer electrolyte fuel cell of Examples 1 to 6 and Comparative Example 1 were evaluated as follows.

Carbon paper on which no microporous layer was formed was used as Comparative Example 2. The evaluation results are shown in Table 1.

**[Table 1]**

| Thermoplastic resin | | | | | | Water-repellent resin | Laminate | |
|---|---|---|---|---|---|---|---|---|
| | Melting point (°C) | Melt viscosity (Pa·s) | Average particle size of secondary particles (µm) | Water contact angle (degree) | Amount of dissolved metal ions (ppm) | Melting point (°C) | Water contact angle (degree) | Electrical resistance (mΩcm²) |
| Example 1 | 280 | 13 | 10 | 98 | 62 | - | 135 | 2.4 |
| Example 2 | 280 | 13 | 10 | 98 | 62 | - | 135 | 1.6 |
| Example 3 | 280 | 13 | 30 | 98 | 62 | - | 135 | 8.9 |
| Example 4 | 280 | 13 | 30 | 98 | 62 | - | 135 | 2.3 |
| Example 5 | 280 | 180 | 30 | 98 | 62 | - | 135 | 11.5 |
| Example 6 | 280 | 180 | 30 | 98 | 62 | - | 135 | 2.3 |
| Example 7 | - | - | - | - | - | - | - | 2.1 |
| Comparative Example 1 | - | - | - | - | - | 326.8 | - | 2.2 |
| Comparative Example 2 | - | - | - | - | - | - | - | 1.2 |

### <Measurement of Electrical Resistance>

The sample (laminate or carbon paper) was held with circular copper electrodes having a diameter of 20 mm, and then, a voltage was measured with a four-probe method under conditions including a compression-interface pressure of 1 MPa and an applied current of 1 A. Thereafter, an electrical resistance was calculated.

Measuring the thermal conductivity of porous bodies is difficult, and the resulting thermal conductivity is that of a limited measurement region. In the present invention, for the purpose of ascertaining properties for a relatively sufficient area, a relative evaluation that used the electrical resistance was employed to evaluate the magnitude of the thermal conductivity, based on the fact that the electrical resistance and the thermal conductivity are substantially in a proportional relationship.

A comparison between the Examples and Comparative Example 2 demonstrates that the formation of a microporous layer containing the thermoplastic resin masses or the like resulted in a reduced thermal conductivity of the laminate, and, accordingly, the adjustment of the heat dissipation properties of the fuel cell was made possible.

Furthermore, a comparison between Comparative Example 1 and Comparative Example 2 demonstrates that laminating a water-repellent resin and a conductive carbon material to the microporous layer of the Examples further reduced the thermal conductivity of the laminate.

The cross-sectional image of Comparative Example 1 demonstrates that the microporous layer was not entangled with the fiber of the gas diffusion layer. In contrast, the cross-sectional images of the Examples demonstrate that the microporous layer extended into an interior of the gas diffusion layer and was entangled with the fiber of the gas diffusion layer.

A comparison between Example 1 and Example 2 (Fig. 6 and Fig. 8), a comparison between Example 3 and Example 4 (Fig. 10 and Fig. 11) and a comparison between Example 5 and Example 6 (Fig. 13 and Fig. 14) demonstrate that the amount of migration into the gas diffusion layer varied depending on the amount of application of the thermoplastic resin, that is, in instances where the amount of application was small, the entering into the gas diffusion layer was facilitated, and adhesion was improved.

### Example 7

In Example 1 to 6, proof of principle was performed by using only a polyphenylene sulfide resin, without using any conductive carbon material. In Example 7, a microporous layer including a conductive carbon material and the resin was formed on carbon paper to give a laminate for a fuel cell, and a unit cell of a fuel cell including the laminate was assembled and subjected to an evaluation of power generation.

A carbon black and the polyphenylene sulfide resin, which were used in a weight ratio of 7:3, were mixed and dispersed in an aqueous solution of isopropyl alcohol. The dispersion was applied to a surface of carbon paper and dried at 375°C for 30 minutes to give a laminate for a fuel cell.

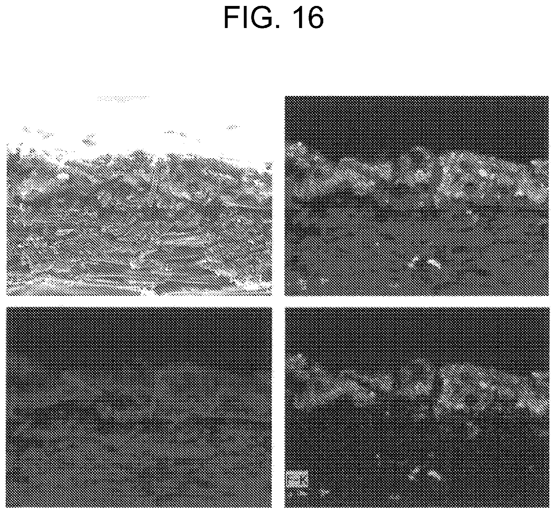

Fig. 16 shows SEM-EDX cross-sectional photographs of the laminate for a fuel cell prepared in Example 7. Fig. 16 shows distributions of carbon and sulfur (upper right), carbon (lower left) and sulfur (lower right), in addition to a cross-sectional photograph (upper left). In particular, regarding the distribution of the sulfur (polyphenylene sulfide resin), it was confirmed that the sulfur was present not only within the microporous layer but also at an interface with the carbon paper and in an inner region near the surface layer.

The electrical resistance of the laminate for a fuel cell prepared in Example 7 was measured, and the result is shown in Table 1. It was found that the laminate had a low electrical resistance comparable to that of, for instance, Comparative Example 1 and thus that the laminate that was formed was adequate in terms of electrical performance.

A square piece measuring approximately 5 cm × 5 cm was cut from the laminate prepared in Example 7 and then attached to cathode and anode catalyst layers formed on front and back surfaces of an electrolyte membrane (Nafion NR212 was used as the electrolyte membrane). In this manner, a membrane electrode assembly (MEA) was prepared.

The laminate for a fuel cell was placed to firmly hold the MEA, and a separator was placed to firmly hold the resultant. In this manner, a unit cell of a fuel cell was assembled.

The polyphenylene sulfide resin used in Example 7 was comparable to that of Example 1, described above.

### Example 8

A microporous layer was prepared under the same conditions as those of Example 7, except that the polyphenylene sulfide resin used was a modified version of the polyphenylene sulfide resin used in Example 7; the modified version was one that was pretreated to reduce the dissolution of sodium ions that were single units and of resin monomers and oligomers to which sodium was bound. Thereafter, a unit cell of a fuel cell incorporating the microporous layer was prepared.

### Comparative Example 3

A microporous layer was prepared under the same conditions as those of Example 7, after the polyphenylene sulfide resin used in Example 7 was pre-heat-treated at 400°C, which was close to the thermal decomposition temperature of 430°C of the resin, for 10 minutes. Thereafter, a unit cell of a fuel cell incorporating the microporous layer was prepared.

### Comparative Example 4

A laminate for a fuel cell and a unit cell of a fuel cell were prepared, except that a microporous layer was prepared with PTFE and carbon black, which are used in the related art, without using any thermoplastic resin as in Comparative Example 1.

### <Dissolution Property of Sodium Ions>

A simple examination was performed to identify the amount of sodium ions that could be dissolved from the polyphenylene sulfide resins that were used in Examples 7 and 8 and Comparative Example 3. 1 g of each of the resins was added to 50 g of purified water, which was then stirred with sonication and held at 100°C for 6 hours. During that time, the vessel was stirred several times.

The ultrapure water was removed from the vessel, and subsequently, qualitative analysis was performed by flame atomic absorption spectroscopy, mentioned above.

50 g of freshly prepared purified water was added to the polyphenylene sulfide resin after the immersion experiment was completed, and the contents were stirred and subsequently held again at 100°C for 6 hours. During that time, the vessel was stirred several times as described above.

After the contents were held for 6 hours, the ultrapure water was removed from the vessel, and subsequently, qualitative analysis was performed. The results are shown in Table 2.

**[Table 2]**

| | Na ions (ppm) | |
|---|---|---|
| | After 1st immersion | After 2nd immersion |
| Example 7 | 50 | 9 |
| Example 8 | 15 | 3 |
| Comparative Example 3 | 120 | 82 |

It was found that the determined amount of sodium ions associated with the resin of Example 8 was one-third or less that associated with the resin of Example 7, and that the amount was further reduced as a result of the exchange of purified water.

That is, it was found that the performing of a predetermined preparatory treatment on the polyphenylene sulfide resin itself in advance reduced the amount of dissolved sodium ions provided that the conditions were the same.

Comparative Example 3 is an example in which a portion of the resin was intentionally decomposed so that the decomposed components to which sodium was bound could be easily dissolved; this treatment was performed to ascertain differences in the power generation performance in the evaluation of a unit cell of a fuel cell, which will be described later.

Table 2 demonstrates that the amount of dissolved sodium ions in Comparative Example 3 was relatively high. In the comparative example, the heat treatment was intentionally performed at a high temperature. This is an example that simulated a possibility that the amount of dissolved sodium ions could become greater than or equal to that of Example 7 or similar to that of Comparative Example 3 as might occur in association with certain specifications of polyphenylene sulfide resins.

### <Evaluation of Unit Cell of Fuel Cell>

The evaluation of a unit cell of a fuel cell was performed at a cell temperature of 70°C, with a supply of hydrogen of 100 cc per minute and a supply of air of 500 cc per minute. For both gases, an amount of humidification was 60% RH.

In general, according to many reports, the evaluation of a fuel cell regarding power generation is carried out by examining the power generation performance by measuring a current-voltage curve. Accordingly, to verify the effect of the present invention, the current-voltage curve was measured under the above-described conditions, and the result was designated as initial performance.

Furthermore, to examine the influence on the electrolyte membrane of the dissolution of sodium ions derived from the polyphenylene sulfide resin, the unit cell was held at the same cell temperature for 1 hour with 100 cc per minute of nitrogen gas being supplied to both electrodes.

Note that the humidification with nitrogen on the anode side (hydrogen electrode side) was performed at 100% RH, and that the humidification with nitrogen gas on the cathode side (air electrode side) was performed at 30% RH. Accordingly, an environment was provided in which water vapor supplied to the anode side and water partially condensed within the cell can easily move from the anode side to the cathode side as a result of the concentration gradient between the water at both electrodes.

Under these conditions, the sodium ions dissolved into condensed water, particularly on the anode side, were able to migrate to the electrolyte membrane, and, accordingly, it was possible to examine the influence of dissolved sodium on the power generation performance.

After the 1-hour supply of nitrogen was completed, hydrogen and air were supplied again to the cell under the above-described conditions to measure the current-voltage curve. The result was designated as diagnostic performance.

Table 3 summarizes the results of the evaluation of the initial performance and the diagnostic performance and cell voltages at an open circuit voltage (OCV) and at a current density of 0.5 A/cm² of each of the unit cells of the fuel cells.

**[Table 3]**

| Current density | Initial performance | | Diagnostic performance | |
|---|---|---|---|---|
| | OCV | 0.5 A/cm² | OCV | 0.5 A/cm² |
| Example 7 | 0.952 V | 0.585 V | 0.953 V | 0.581 V |
| Example 8 | 0.951 V | 0.584 V | 0.951 V | 0.584 V |
| Comparative Example 3 | 0.951 V | 0.579 V | 0.951 V | 0.566 V |
| Comparative Example 4 | 0.954 V | 0.589 V | 0.954 V | 0.589 V |

The results in Table 3 indicate that, at the open single voltage (OCV), at which resistive components were not generated, no significant differences were observed in the initial performance and the diagnostic performance between the Examples and the Comparative Examples. OCVs are substantially equal as long as critical degradation that affects a gas barrier property of the electrolyte membrane does not occur. Accordingly, it is apparent that the gas barrier property of the electrolyte membrane used did not vary between the Examples and the Comparative Examples. Furthermore, the results confirm that the dissolution of sodium ions did not affect the gas barrier property of the electrolyte membrane.

The cell voltages at 0.5 A/cm² of Examples 7 and 8 were substantially equal to that of Comparative Example 4, in which sodium ions were not dissolved, although a slight difference of 4 to 5 mV in the initial performance was observed.

Regarding the diagnostic performance, a voltage drop of 4 mV with respect to the initial performance was detected in Example 7, whereas no voltage drop was detected in Example 8 as in Comparative Example 4, which confirms the effect of the use of a polyphenylene sulfide in which the dissolution of sodium ions was inhibited.

In Comparative Example 3, in which the determined amount of sodium was relatively high as shown in Table 2, the diagnostic performance exhibited a voltage drop of 13 mV with respect to the initial performance. Furthermore, it was found that the voltage was 20 mV or more less than that of Comparative Example 4.

A likely cause of the decrease in the power generation performance of Comparative Example 3 is an influence of the sodium ions dissolved from the polyphenylene sulfide resin on an ion-exchange capability of the electrolyte.

The results in Table 2 demonstrate that the immersion in hot water reduced the amount of sodium ions dissolved from the polyphenylene sulfide resin.

Accordingly, by using, for example, an acidic aqueous solution or the like instead of purified water, the dissolution of sodium can be further promoted.

While the washing of the resin alone is effective, it is possible to, after a fuel cell is assembled, supply a non-reactive gas, such as nitrogen, under high-humidity conditions, to discharge sodium from the cell together with water vapor and condensed water, as described above. In this case, the washing of the microporous layer can also be expected.

### Example 9

A single film of a microporous layer was prepared as follows. A carbon black and the polyphenylene sulfide resin, which were used in a weight ratio of 6:4, were mixed and dispersed in an aqueous solution of isopropyl alcohol. The dispersion was applied onto a glass plate and subsequently dried at 375°C for 30 minutes, and the microporous layer was removed from the glass plate.

The resulting film was placed on carbon paper, and compressing was performed at an interface pressure of 2 MPa to give a laminate for a fuel cell.

### Comparative Example 5

A microporous layer was formed on a glass plate as in Example 9, except that PTFE and a carbon black were used as in Comparative Example 1 with the weight ratio being changed to 4:6. The resulting single film was integrated with carbon paper under the same conditions as those of Example 9 to give a laminate for a fuel cell.

In Example 9 and Comparative Example 5, the microporous layer was not directly formed on a surface of the gas diffusion layer, that is, a film was formed and dried on a substrate, which was an attempt to see whether it was possible to form a free-standing single film. Table 4 summarizes the results of the electrical resistance of the laminates for a fuel cell including the single film.

**[Table 4]**

| Current density | Electrical resistance (mΩcm²) |
|---|---|
| Example 9 | 4.1 |
| Comparative Example 5 | 3.5 |

The entire contents of the specification, claims, drawings and abstract of Japanese Patent Application No. 2021-55008, filed on March 29, 2021, and of the specification, claims, drawings and abstract of Japanese Patent Application No. 2021-192412, filed on November 26, 2021, are incorporated herein by reference and incorporated as a disclosure of the specification of the present invention.

### REFERENCE SYMBOLS

- 1: assembly of components forming fuel cell
- 2: electrolyte membrane
- 3: catalyst layer
- 4: microporous layer (MPL)
- 5: gas diffusion layer (GDL)
- 6: laminate of MPL and GDL in which thermoplastic resin is uniformly dispersed
- 7: thermoplastic resin
- 8: laminate of MPL and GDL in which thermoplastic resin is disproportionately present near GDL

## Claims

1. A thermoplastic resin for forming a microporous layer of a polymer electrolyte fuel cell, wherein
the thermoplastic resin has a melt viscosity at 350°C of less than or equal to 200 Pa.s, and
in an instance where 2 g of the thermoplastic resin is immersed in 100 ml of hot water having a temperature of 100°C for 6 hours, an amount of metal ions dissolved from the thermoplastic resin is less than or equal to 65 ppm.

2. The thermoplastic resin according to claim 1, wherein the thermoplastic resin has a melting point of 120°C or greater and 300°C or less.

3. The thermoplastic resin according to claim 1 or 2, wherein secondary particles of the thermoplastic resin have an average particle size of 5 µm or greater and 50 µm or less.

4. The thermoplastic resin according to any one of claims 1 to 3, wherein secondary particles of the thermoplastic resin have a specific surface area of greater than or equal to 2.0 m²/g.

5. The thermoplastic resin according to any one of claims 1 to 4, wherein the thermoplastic resin has a water contact angle of 80° or greater and 120° or less.

6. The thermoplastic resin according to any one of claims 1 to 5 comprising a filler.

7. The thermoplastic resin according to any one of claims 1 to 6, wherein the thermoplastic resin is a polyphenylene sulfide resin.

8. A thermosetting resin for forming a microporous layer of a polymer electrolyte fuel cell, wherein
the thermosetting resin has a melt viscosity at 350°C of less than or equal to 200 Pa.s, and
in an instance where 2 g of the thermosetting resin is immersed in 100 ml of hot water having a temperature of 100°C for 6 hours, an amount of metal ions dissolved from the thermosetting resin is less than or equal to 65 ppm.

9. A liquid dispersion composition for forming a microporous layer of a polymer electrolyte fuel cell, wherein the liquid dispersion composition comprises
the thermoplastic resin according to any one of claims 1 to 7,
a conductive carbon material,
a dispersion medium and
a dispersing agent.

10. The liquid dispersion composition for forming a microporous layer of a polymer electrolyte fuel cell according to claim 9, further comprising a water-repellent resin.

11. The liquid dispersion composition for forming a microporous layer of a polymer electrolyte fuel cell according to claim 9 or 10, wherein the thermoplastic resin is present in an amount of 3 mass% or greater and 35 mass% or less.

12. A liquid dispersion composition for forming a microporous layer of a polymer electrolyte fuel cell, wherein the liquid dispersion composition comprises
the thermosetting resin according to claim 8,
a conductive carbon material,
a dispersion medium and
a dispersing agent.

13. A laminate for a polymer electrolyte fuel cell, wherein
the laminate comprises a gas diffusion layer and a microporous layer that are laminated to each other,
the microporous layer comprises thermoplastic resin masses derived at least from the thermoplastic resin according to any one of claims 1 to 7 and
the thermoplastic resin masses are dispersed in a vicinity of an interface between the gas diffusion layer and the microporous layer.

14. The laminate for a polymer electrolyte fuel cell according to claim 13, wherein, in the microporous layer, a large proportion of the thermoplastic resin masses is present near the gas diffusion layer.

15. The laminate for a polymer electrolyte fuel cell according to claim 13 or 14, wherein the microporous layer includes, in an in-plane direction of the microporous layer, a region in which the thermoplastic resin masses exist and a region in which the thermoplastic resin masses do not exist.

16. The laminate for a polymer electrolyte fuel cell according to any one of claims 13 to 15, wherein a ratio between an average particle size of the thermoplastic resin masses and an average pore size of the gas diffusion layer, which is a ratio of the average particle size to the average pore size, is 0.14 or greater and 1.25 or less.

17. The laminate for a polymer electrolyte fuel cell according to any one of claims 13 to 16, wherein the thermoplastic resin masses have an average particle size of 5 µm or greater and 50 µm or less.

18. A laminate for a polymer electrolyte fuel cell, wherein
the laminate comprises a gas diffusion layer and a microporous layer that are laminated to each other,
the microporous layer comprises thermosetting resin masses derived at least from the thermosetting resin according to claim 8 and
the thermosetting resin masses are dispersed in a vicinity of an interface between the gas diffusion layer and the microporous layer.

19. A method for manufacturing the laminate for a polymer electrolyte fuel cell according to any one of claims 13 to 17 comprising:
applying the liquid dispersion composition for forming a microporous layer according to any one of claims 9 to 12 onto the gas diffusion layer, to form an image of the liquid dispersion composition for forming a microporous layer; and
performing heating.

20. A method for manufacturing the laminate for a polymer electrolyte fuel cell according to any one of claims 13 to 17 comprising:
applying the liquid dispersion composition for forming a microporous layer according to any one of claims 9 to 12 onto a smooth substrate and drying the liquid dispersion composition, to form a single film of a microporous layer;
laminating the single film to a major surface of the gas diffusion layer; and
performing heating and compressing.

21. A method for manufacturing the laminate for a polymer electrolyte fuel cell according to claim 18 comprising:
applying the liquid dispersion composition for forming a microporous layer according to claim 8 onto the gas diffusion layer, to form an image of the liquid dispersion composition for forming a microporous layer; and
performing heating.

22. A method for manufacturing the laminate for a polymer electrolyte fuel cell according to claim 18 comprising:
applying the liquid dispersion composition for forming a microporous layer according to claim 8 onto a smooth substrate and drying the liquid dispersion composition, to form a single film of a microporous layer;
laminating the single film to a major surface of the gas diffusion layer; and
performing heating and compressing.

23. A microporous layer disposed adjacent to a gas diffusion layer for a polymer electrolyte fuel cell and comprising, as major components, conductive carbon and a polyphenylene sulfide resin that serves as the thermoplastic resin according to any one of claims 1 to 7.

24. The microporous layer according to claim 23, wherein the polyphenylene sulfide resin has a number average molecular weight Mn of 1000 or greater and 8000 or less and a weight average molecular weight Mw of 7000 or greater and 40000 or less.

25. The microporous layer according to claim 23 or 24, wherein, in an instance where 1 g of the microporous layer is immersed in 15 g of hot water having a temperature of 100°C in a sealed container for 6 hours, a concentration of metal ions dissolved into the hot water from the microporous layer is less than or equal to 56 ppm.

26. A method for using a laminate for a polymer electrolyte fuel cell comprising a step of, before performing a power generation operation in a fuel cell, passing at least one of media through the laminate for a polymer electrolyte fuel cell according to any one of claims 13 to 18, the media being purified water, an acidic aqueous solution and water vapor.
